# DEMANDE DE BREVET EUROPEEN

(11) **EP 1 854 693 A1**
(43) Date de publication de la demande: **14.11.2007**
(21) Numéro de dépôt: 07290594.6
(22) Date de dépôt: 10.05.2007
(51) Int. Cl.: B61D 3/18, B60P 7/08

(54) **Dispositif de protection latérale pour moyen de transport et moyen de transport le comportant**

(30) Priorité: 11.05.2006 FR 0604207
(71) Demandeur: Societe de Transports de Vehicules Automobiles, 75017 Paris (FR)
(72) Inventeur: Benac, Philippe, 94220 Charenton le Pont (FR)
(74) Mandataire: Santarelli

(57) **Abrégé**

L'invention concerne un dispositif de protection latérale (1) pour moyen de transport comportant :
- un filet (10) de type élastique à effet ressort constitué d'une pluralité de brins (101) disposés côté à côte, et qui sont reliés entre eux par des manchons (102) de serrage, chaque brin étant relié de façon alternée avec l'un ou l'autre des brins voisins à intervalles réguliers,
- des moyens de fixation pour fixer le filet (10) à la structure (400) du moyen de transport à protéger.

## Description

### DOMAINE DE L'INVENTION

La présente invention concerne un dispositif de protection latérale pour un moyen de transport.

Plus particulièrement, la présente invention concerne un dispositif de protection latérale pour wagon porte-véhicules.

### ARRIERE-PLAN TECHNOLOGIQUE

Dans le domaine technique des transports, particulièrement dans le domaine du transport ferroviaire, il est nécessaire de protéger les marchandises transportées, notamment contre le vandalisme.

On connaît à cet effet des dispositifs de protection latérale pour moyens de transports réalisés en grillage métallique maintenu dans un cadre fixé sur la structure du moyen de transport, par exemple un wagon porte-véhicules.

Ce type de dispositif de protection latérale est particulièrement bruyant lors du transport dans la mesure où les vibrations du moyen de transport sont transmises au grillage via le cadre ou par les turbulences aérodynamiques environnantes. Dans certains cas, l'utilisation de ce type de protection latérale est impossible à cause de la législation en vigueur en matière d'émissions sonores.

On connaît également des protections réalisées en panneaux de polycarbonate fixés sur la structure du moyen de transport. Le coût de fabrication de ce type de protection reste cependant très élevé, notamment à cause du prix des matériaux constitutifs.

D'une manière générale, les protections mentionnées supra sont lourdes et font augmenter la tare du moyen de transport qui en est équipé, ce qui entraine une baisse de sa charge utile : c'est notamment le cas avec les protections en polycarbonate.

### OBJET DE L'INVENTION

La présente invention vise à palier ces inconvénients. Elle propose à cet effet un dispositif de protection latérale pour moyen de transport comportant :
- un filet de type élastique à effet ressort constitué d'une pluralité de brins disposés côté à côte, et qui sont reliés entre eux par des manchons de serrage, chaque brin étant relié de façon alternée avec l'un ou l'autre des brins voisins à intervalles réguliers,
- des moyens de fixation pour fixer le filet à la structure du moyen de transport à protéger.

Un filet de ce type est connu en soi, par exemple du document CH 376 459.

L'utilisation d'un tel filet pour la fabrication des protections latérales pour moyens de transport, permet d'obtenir des caractéristiques particulièrement avantageuses.

Le filet du document précité est constitué d'une pluralité de brins aller et retour. Chaque brin étant relié alternativement aux brins voisins par des manchons, à intervalles réguliers, on comprendra que les mailles du filet ainsi formées peuvent se déformer, de manière à rétrécir selon une direction de l'une de leurs diagonales et à s'élargir selon l'autre direction diagonale. Le réseau de mailles ainsi constitué peut absorber, par sa déformation élastique, une grande quantité d'énergie, par exemple l'énergie d'un projectile lancé vers la protection latérale du moyen de transport (jets de pierres par exemple).

Avantageusement, de par la structure du filet, le dispositif de protection latérale selon l'invention ne génère pratiquement pas de bruits en réponse aux vibrations du moyen de transport en mouvement ou aux turbulences aérodynamiques.

Par ailleurs, la conception du dispositif de protection selon l'invention le rend beaucoup plus léger que les réalisations connues, ce qui a pour avantage de diminuer la tare et d'augmenter la charge utile du moyen de transport qui en est équipé.

Ainsi, la structure du filet est mise à profit pour conférer au dispositif de protection latérale selon l'invention des propriétés particulièrement avantageuses.

Avantageusement, le dispositif de protection selon l'invention peut être réalisé avec des composants standards disponibles dans le commerce, ce qui permet d'en réduire les coûts de fabrication.

Selon une caractéristique avantageuse, le dispositif comporte en outre des moyens de tension propres à être disposés entre le filet et la structure du moyen de transport, de manière à tendre le filet lorsque celui-ci est fixé à la structure.

Avantageusement, ces moyens de tension assurent au filet une meilleure capacité d'absorption d'énergie par sa déformation élastique ainsi qu'une meilleure absorption des vibrations et donc une réduction du bruit.

Selon une caractéristique préférée pour des raisons de facilité de mise en oeuvre et de fiabilité, les moyens de fixation du filet sont constitués, d'une part, de moyens d'ancrage répartis, de place en place, uniformément sur chacun des bords extérieurs du filet, et d'autre part, de rails destinés à être fixés sur la structure du moyen de transport et adaptés à recevoir les moyens d'ancrage du filet de manière à retenir celui-ci, tout en autorisant les moyens d'ancrage à s'y mouvoir en translation.

De part la structure des mailles du filet, une traction appliquée à une maille selon la direction de l'une de ses diagonales entraine un élargissement de la maille selon cette direction d'application et un rétrécissement selon l'autre direction diagonale. De la même manière, une traction uniformément répartie sur l'ensemble du filet constitué de ce type de mailles, selon l'une de ces directions entraine un élargissement du filet selon cette direction et un rétrécissement du filet selon l'autre de ces deux directions. Ainsi, on comprend que lorsqu'une tension est appliqué à ce type de filet, il est avantageux de laisser les moyens d'ancrage libres de translater selon les directions des bords du filet de manière à ce que celui-ci puisse être tendu de manière uniforme.

Selon des caractéristiques préférées, pour des raisons de fiabilité et de commodité :
- un cadre de support pour le filet est prévu, supportant les rails de réception qui coopèrent avec les moyens d'ancrage du filet et il est adapté à être fixé à la structure du moyen de transport à protéger ;
- le cadre de support est réalisé avec des profilés formant les rails de réception ;
- au moins un profilé du cadre peut être déplacé par rapport aux autres profilés de manière à tendre le filet via les moyens de tension disposés entre ledit au moins un profilé et la structure du moyen de transport à protéger.

Ainsi, le filet peut être tendu aisément, tout en assurant une répartition uniforme de la tension sur toute sa surface. De plus, comme expliqué précédemment, une traction selon une direction sur un filet de ce type entraine un élargissement des mailles selon la diagonale de la direction de traction et un rétrécissement selon la direction de l'autre diagonale. On comprendra que dans ce cas, qu'une tension du filet selon l'une de ces deux directions entraine un rétrécissement du filet selon l'autre de ces deux directions. Le filet étant ancré dans le cadre, ceci contribue à rigidifier le dispositif de protection latérale, et lui assure une meilleure capacité d'absorption d'énergie et une réduction du bruit en service.

Selon d'autres caractéristiques préférées de l'invention, pour des raisons de fiabilité et de commodité :
- le cadre est adapté à coopérer avec des moyens de fixation du cadre prévus sur la structure du moyen de transport ;
- le filet est réalisé à l'aide d'un câble unique disposé en zigzag aller et retour de manière à former les brins disposés côte à côte ;
- les profilés du cadre de support pour le filet ont une section en U dont chacune des branches possède un retour sensiblement perpendiculaire vers l'intérieur du U pour former un rail de réception pour les moyens d'ancrage du filet ;
- les moyens d'ancrage du filet sont des cylindres percés, débouchants, et insérés sur le câble constituant le filet et libres de translater sur celui-ci ;
- les cylindres sont insérés à translation dans les profilés en U formant rails ;
- les brins du filet sont réalisés avec un câble métallique entouré d'une gaine protectrice en matière plastique ;
- le cadre est sensiblement rectangulaire et les profilés formant le cadre sont insérés dans des pièces de raccordement dans les coins du cadre de manière à assembler les profilés les uns aux autres, et dans les coins supérieurs du cadre les pièces de raccordement sont des pièces à profil en T, adaptées pour fixation à la structure du moyen de transport, et dans les coins inférieurs du cadre les pièces de raccordement sont des pièces en L permettant au profilé inférieur de translater par rapport aux deux profilés latéraux afin de tendre le filet.

De manière préférée pour des raisons de mise en oeuvre :
- le dispositif de protection latérale pour moyen de transport est destiné à un moyen de transport terrestre ; et
- le dispositif de protection latérale pour moyen de transport est destiné à un wagon porte-véhicules.

L'invention concerne, selon un autre aspect, l'utilisation d'un filet de type élastique à effet ressort constitué d'une pluralité de brins disposés côté à côte, et qui sont reliés entre eux par des manchons de serrage, chaque brin étant relié de façon alternée avec l'un ou l'autre des brins voisins à intervalles réguliers, pour la protection latérale de wagons porte-véhicules.

### BREVE DESCRIPTION DES DESSINS

L'exposé de l'invention sera maintenant poursuivi par la description détaillée d'un exemple de réalisation, donnée ci-après à titre illustratif et non limitatif, en référence aux dessins annexés. Sur ceux-ci :
- la figure 1 est une vue de face d'un dispositif de protection pour moyen de transport selon l'invention ;
- la figure 2 est une vue de détail d'un filet pour dispositif de protection selon l'invention ;
- la figure 3 est une vue en perspective d'un profilé pour un cadre de support de protection latérale tel que représenté en figure 1 ;
- la figure 4 est une vue de détail en perspective d'une extrémité du cadre de support profilé de la protection latérale représenté en figure 1 ;
- la figure 5 est une vue de face d'une protection latérale selon l'invention, en cours de montage sur un wagon porte-véhicules ;
- la figure 6 est une vue de détail en perspective d'un dispositif de fixation du cadre sur la structure du wagon en cours de montage ;
- la figure 7 est une vue de face de ce même dispositif en position montée ;
- la figure 8 est une vue de face d'une protection latérale selon l'invention en position de service sur un wagon porte-véhicules.

### DESCRIPTION DETAILLEE D'UN EXEMPLE DE REALISATION

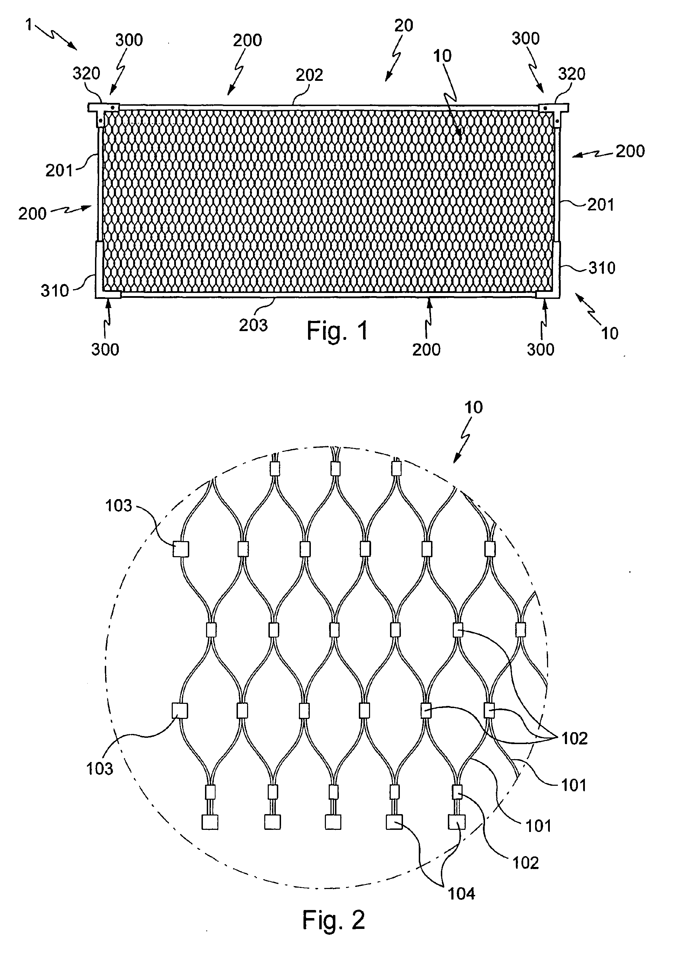

La figure 1 représente un dispositif de protection latérale 1 pour moyen de transport comportant un filet 10 et un cadre de support 20 pour le filet.

Le cadre 20 est composé de quatre profilés 200 :
- deux profilés latéraux 201,
- un profilé supérieur 202, et
- un profilé inférieur 203,
   et de quatre éléments de raccordement 300 pour les profilés :
- deux éléments de raccordement supérieurs en "T" 320,
- deux éléments de raccordement inférieurs en "L" 310.

Les profilés 200 formant le cadre 20 sont insérés dans les pièces de raccordement 300 dans chacun des coins du cadre de manière à assembler les profilés les uns aux autres. Dans les coins supérieurs du cadre, les pièces de raccordement 302 à profil en "T" sont disposées de manière à fixer le cadre sur la structure du moyen de transport. Dans les coins inférieurs du cadre, les pièces de raccordement à profil en L sont conçues de manière à coulisser sur les profilés latéraux 201 de manière à pouvoir déplacer le profilé inférieur 203 en translation parallèlement au profilé supérieur 202.

Comme visible plus particulièrement en figure 2, le filet 10 est constitué d'une pluralité de brins 101 qui sont reliés entre eux par des manchons de serrage 102 à intervalles réguliers, chaque brin étant relié de façon alternée avec l'un ou l'autre des brins voisins de manière à former des mailles 105 ayant globalement la forme d'un losange. En figure 2, par souci de clarté, seuls deux brins 101 et quatre manchons 102 formant une même maille 105 ont été repérés. Il est à noter qu'à aucun moment, les brins constitutifs du filet ne se chevauchent. Sur l'ensemble du filet, les brins sont tous dans un même plan.

Les extrémités du filet 10 sont pourvues de moyens d'ancrage répartis de place en place uniformément sur chacun des bords extérieurs du filet. Les côtés verticaux du filet sont pourvus de cylindres 103 percés débouchants insérés sur le brin extérieur du filet entre deux manchons de serrage consécutifs. Les bords supérieur et inférieur du filet sont pourvus de cylindres d'ancrage 104 sertis autour des extrémités libres de deux brins voisins après le dernier manchon de serrage qui les relie. Les cylindres 103 et 104 constituent les moyens d'ancrage du filet dans les profilés du cadre 20.

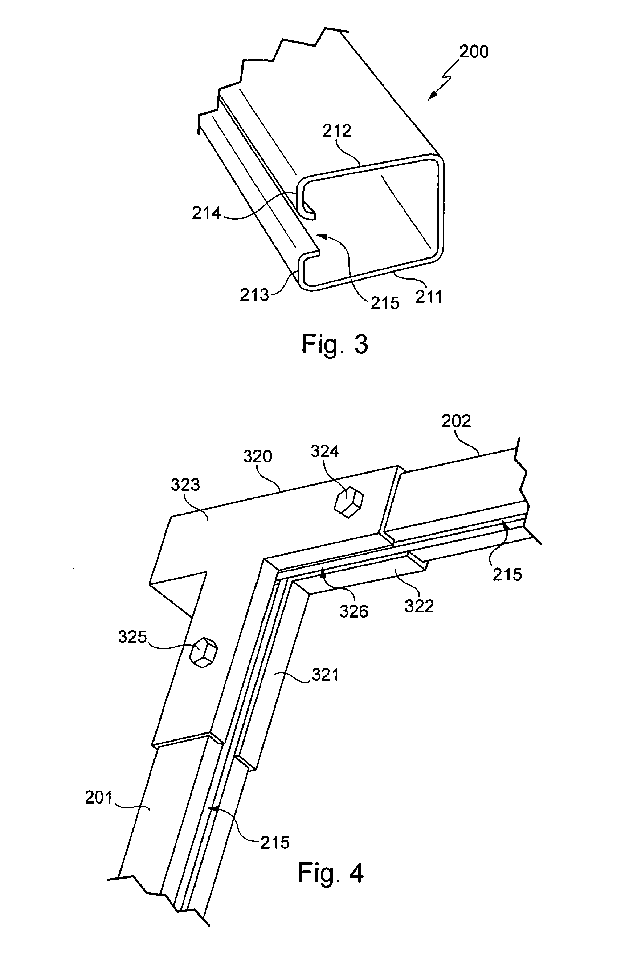

Comme visible plus particulièrement en figure 3, les profilés 200 formant le cadre de support pour le filet 10 ont une section en U dont chacune des branches 211, 212 possède un retour, respectivement 213, 214, sensiblement perpendiculaire vers l'intérieur du U pour former un rail de réception 215 pour les moyens d'ancrage du filet 103, 104.

Les profilés 201, 202, et 203 du présent cadre ont tous la même section décrite supra.

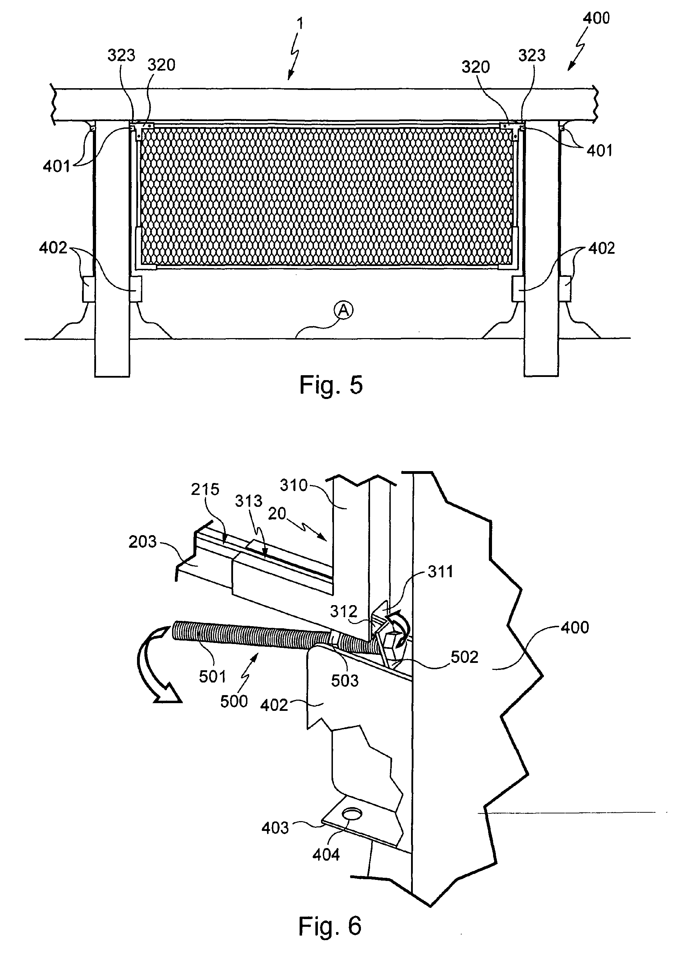

Une pièce de raccordement 320 à profil en "T" est représentée plus en détails en figure 4. Elle permet de raccorder le profilé supérieur 202 du cadre 20 à un des profilés latéraux 201. L'extrémité du profilé 202 est insérée dans une portion latérale 322 de la pièce de raccordement 320 et y est fixée à l'aide d'un boulon 324 traversant la portion de raccordement 322 et le profilé 202. De manière similaire, le profilé 201 est inséré dans une portion de raccordement 321 de la pièce de raccordement 320 et y est immobilisé par un boulon traversant 325. La pièce 320 comporte une ouverture 326 sur toute la longueur de son flanc intérieur faisant face au filet (non représenté) de manière à laisser l'accès aux rails 215 de chacun des profilés 201, 202. Ainsi, les moyens d'ancrage 103 et 104 peuvent coulisser dans les rails 215 jusque dans les coins du cadre 20. La pièce de raccordement 320 possède en outre une extension 323 faisant face à la portion de raccordement 322 et permettant de fixer le cadre 20 à une structure d'un moyen de transport à protéger.

Comme visible en figure 5, au cours du montage dans une ouverture latérale formée par une structure 400 d'un moyen de transport, ici un wagon porte-véhicules, un dispositif de protection latérale 1 tel que représenté en figure 1 est inséré dans des supports 401 en forme de "U" prévus sur la structure 400 de manière à suspendre le cadre 20 via les extensions 323 des pièces de raccordement 320. Les pièces de raccordement à profil en "L" 310 sont ensuite présentées devant des guides 402 prévus sur la structure 400 du moyen de transport. Les guides 402 sont constitués de deux tôles parallèles soudées à la structure 400, comme visible plus clairement en figure 6.

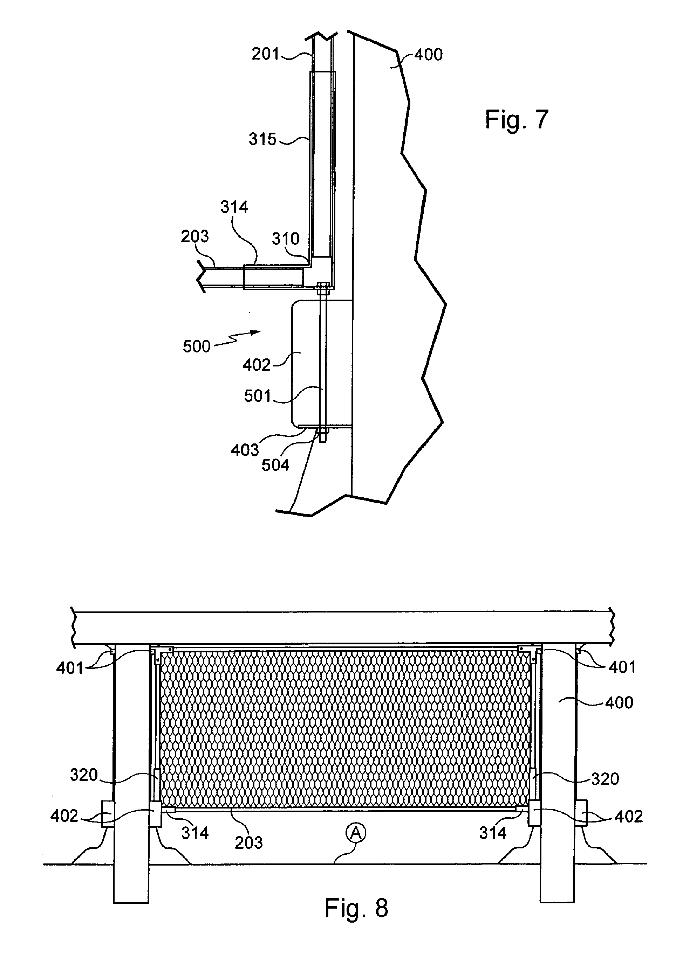

En cours de montage, comme visible sur cette figure, des moyens de tension 500 sont ensuite disposés entre le cadre de support 20 pour le filet et la structure du moyen de transport 400. Ces moyens de tension se composent d'une vis 501 équipée d'une plaquette rectangulaire 502 disposée sous la tête de la vis 501. Un évidement 311 est prévu sur la face latérale extérieure de la pièce de raccordement 310 et un évidement 312 laissant des rebords libres est prévu à l'extrémité de la face inférieure adjacente à la face latérale précitée de manière à accueillir en appui sur ses rebords la plaquette 502 de la vis 501. Un contre écrou 503 est prévu pour serrer la tête de la vis 501 contre la plaquette 502 et la pièce de raccordement 310. Une plaque de tension 403 est prévue entre les extrémités inférieures des deux tôles du guide 402. Cette plaque est percée d'un trou 404 de réception pour la tige filetée de la vis 501. Lorsque la vis 501 est montée sur la pièce de raccordement 310, sa tige filetée se retrouve face au trou 404 prévu dans la plaque 403. La barre inférieure 203 est ensuite abaissée suffisamment pour faire pénétrer la tige filetée de la vis 501 dans le trou 404 comme visible en figure 7. Dans cette position, un écrou 504 est mis en place sur l'extrémité libre de la tige filetée de la vis 501 sous la plaque 403. Ainsi, il est possible de faire descendre la pièce 310 dans les guides 402 en serrant l'écrou 504 et ainsi tendre le filet (non représenté en figures 6 et 7 par souci de clarté) ancré dans les profilés 201 et 203 du cadre 20. On notera que la pièce 310 a été représentée en transparence sur la figure 7 par souci de clarté.

On peut voir en figure 6, que la pièce de raccordement 310, tout comme la pièce de raccordement 320 et pour les mêmes raisons, comporte une ouverture 313 sur toute la longueur de son flanc intérieur faisant face au filet (non représenté) de manière à laisser l'accès aux rails 215 de chacun des profilés 203 et 201 (non visible en figure 6).

On notera également que les branches des pièces de raccordement 310 ne sont pas pourvues de boulons de fixation contrairement aux pièces de raccordement 320. Leurs branches supérieures 315 ne sont pas pourvues de boulons dans la mesure où les profilés 201 doivent pouvoir y coulisser librement, et leurs branches inférieures 314 ne nécessitent pas de boulons, dans la mesure où les boulons 324 et 325 assurent une rigidité suffisante à l'ensemble du cadre 20.

De manière très schématique, les lignes A en figures 5 et 8 représentent le plancher du moyen de transport à protéger, ici un wagon porte-véhicules.

Une fois le filet tendu par les moyens de tension 500, les branches inférieures 314 des pièces de raccordement 320 et donc les extrémités du profilé inférieur 203 qui y sont engagées se retrouvent dans les guides 402 comme visible plus particulièrement en figure 8.

Par souci de clarté, seule une portion du moyen de transport a été représentée en figures 5 et 8. Il est évident que l'on peut reproduire ce montage sur toute la longueur du moyen de transport à protéger par exemple sur toute la longueur du wagon. A cet effet on observera sur ces figures, que des supports 401 et des guides 402 sont prévus pour d'autres dispositifs de protection latérale non représentés, identiques au dispositif 1.

De manière préférée pour des raisons de coûts et de fiabilité, les brins du filet sont réalisés un câble en acier d'un diamètre de 2mm, entouré d'une gaine plastique résistante aux ultra-violets d'une épaisseur de 0.5mm environ.

De préférence, pour des raisons de fiabilité, les dimensions des losanges formés par les manchons autour des mailles du filet sont choisies de manière à ce que la tension du filet soit sensiblement la même selon les deux directions principales des mailles en position de service.

Dans un mode de réalisation non représenté, le filet peut être réalisé dans son intégralité avec un seul brin de câble dont les deux extrémités libres sont reliées à l'aide d'un manchon classique de serrage tel qu'utilisé pour le reste du filet. Dans ce cas le câble est disposé en zig-zag et le brins aller et retour du câble forment des brins disposés côte à côte et reliés entre eux par des manchons tout comme dans la réalisation décrite supra et représentée sur les figures annexées.

Dans une variante autre de réalisation non représentée, des moyens sont prévus sur le cadre pour tendre le filet avant la mise en place du dispositif de protection sur le moyen de transport.

De nombreuses autres variantes sont possibles en fonction des circonstances, et l'on rappelle à cet égard que l'invention ne se limite pas aux exemples décrits et représentés.

## Revendications

1. Dispositif de protection latérale (1) pour moyen de transport comportant :
- un filet (10) de type élastique à effet ressort constitué d'une pluralité de brins (101) disposés côté à côte, et qui sont reliés entre eux par des manchons (102) de serrage, chaque brin étant relié de façon alternée avec l'un ou l'autre des brins voisins à intervalles réguliers,
- des moyens de fixation pour fixer le filet (10) à la structure (400) du moyen de transport à protéger.

2. Dispositif selon la revendication 1, **caractérisé en ce qu'**il comporte, en outre, des moyens de tension (500) propres à être disposés entre le filet (10) et la structure (400) du moyen de transport, de manière à tendre le filet (10) lorsque celui-ci est fixé à la structure (400).

3. Dispositif selon l'une quelconque des revendications précédentes, **caractérisé en ce que** les moyens de fixation du filet sont constitués, d'une part, de moyens d'ancrage (103, 104) répartis, de place en place, uniformément sur chacun des bords extérieurs du filet (10), et d'autre part, de rails (215) destinés à être fixés sur la structure (400) du moyen de transport et adaptés à recevoir les moyens d'ancrage du filet de manière à retenir celui-ci, tout en autorisant les moyens d'ancrage à s'y mouvoir en translation.

4. Dispositif selon la revendication 3, **caractérisé en ce qu'**un cadre (20) de support pour le filet (10) est prévu, supportant les rails (215) de réception qui coopèrent avec les moyens d'ancrage (103, 104) du filet et **en ce qu'**il est adapté à être fixé à la structure (400) du moyen de transport à protéger.

5. Dispositif selon la revendication 4, **caractérisé en ce que** le cadre (20) de support est réalisé avec des profilés (201, 202, 203) formant les rails (215) de réception.

6. Dispositif selon la revendication 5, **caractérisé en ce qu'**au moins un profilé (201, 202, 203) du cadre peut être déplacé par rapport aux autres profilés de manière à tendre le filet (10) via les moyens de tension disposés entre ledit au moins un profilé et la structure du moyen de transport à protéger.

7. Dispositif selon l'une quelconque des revendications 4 à 6, **caractérisé en ce que** le cadre (20) est adapté à coopérer avec des moyens de fixation (401, 402, 403, 404) du cadre prévus sur la structure (400) du moyen de transport.

8. Dispositif selon l'une quelconque des revendications précédentes, **caractérisé en ce que** le filet (10) est réalisé à l'aide d'un câble unique disposé en zigzag aller et retour de manière à former les brins (101) disposés côte à côte.

9. Dispositif selon l'une quelconque des revendications 5 à 8, **caractérisé en ce que** les profilés (201, 202, 203) du cadre (20) de support pour le filet (10) ont une section en "U" dont chacune des branches (211, 212) possède un retour (213, 214) sensiblement perpendiculaire vers l'intérieur du "U" pour former un rail (215) de réception pour les moyens d'ancrage (103, 104) du filet.

10. Dispositif selon l'une quelconque des revendications 3 à 9, **caractérisé en ce que** les moyens d'ancrage (103, 104) du filet sont des cylindres percés, débouchants, et insérés sur le câble constituant le filet et libres de translater sur celui-ci.

11. Dispositif selon la revendication 10, **caractérisé en ce que** les cylindres sont insérés à translation dans les profilés (201, 202, 203) en "U" formant rails (215).

12. Dispositif selon l'une quelconque des revendications précédentes, **caractérisé en ce que** les brins (101) du filet (10) sont réalisés avec un câble métallique entouré d'une gaine protectrice en matière plastique.

13. Dispositif selon l'une quelconque des revendications 5 à 12, **caractérisé en ce que** le cadre (20) est sensiblement rectangulaire et les profilés (201, 202, 203) formant le cadre sont insérés dans des pièces de raccordement (300) dans les coins du cadre de manière à assembler les profilés (201, 202, 203) les uns aux autres, et **en ce que** :
- dans les coins supérieurs du cadre (20) les pièces de raccordement (300) sont des pièces (320) à profil en "T", adaptées pour fixation à la structure (400) du moyen de transport, et
- dans les coins inférieurs du cadre (20) les pièces de raccordement sont des pièces (310) en "L" permettant au profilé inférieur (203) de translater par rapport aux deux profilés latéraux (201) afin de tendre le filet (10).

14. Moyen de transport terrestre comportant un dispositif de protection latérale (1) selon l'une quelconque des revendications précédentes.

15. Moyen de transport selon la revendication 14, **caractérisé en ce qu'**il s'agit d'un wagon porte-véhicules.

16. Utilisation d'un filet (10) de type élastique à effet ressort constitué d'une pluralité de brins (101) disposés côté à côte, et qui sont reliés entre eux par des manchons (102) de serrage, chaque brin étant relié de façon alternée avec l'un ou l'autre des brins voisins à intervalles réguliers, pour la protection latérale de wagons porte-véhicules.
